# EUROPÄISCHE PATENTSCHRIFT

(11) **EP 3 474 436 B1**
(45) Veröffentlichungstag und Bekanntmachung des Hinweises auf die Patenterteilung: **07.09.2022**
(21) Anmeldenummer: 18181074.8
(22) Anmeldetag: 02.07.2018
(51) Int. Cl.: H02P 21/20, B60L 15/20

(54) **VERFAHREN UND SYSTEM ZUM BETREIBEN MINDESTENS EINER ELEKTROMASCHINE**
METHOD AND SYSTEM FOR OPERATING AT LEAST ONE ELECTRICAL MACHINE
PROCÉDÉ ET SYSTÈME DE FONCTIONNEMENT D'AU MOINS UNE MACHINE ÉLECTRIQUE

(30) Priorität: 19.10.2017 DE 102017218661
(43) Veröffentlichungstag der Anmeldung: 24.04.2019
(73) Patentinhaber: AUDI AG, 85045 Ingolstadt (DE)
(72) Erfinder: Heber, Sebastian, 85049 Ingolstadt (DE); Adam, Martin, 01662 Meißen (DE)

(56) Entgegenhaltungen:
- DE-A1-102014 213 985
- DE-A1-102015 015 697

## Beschreibung

Die Erfindung betrifft ein Verfahren zum Betreiben mindestens einer Elektromaschine und ein System zum Betreiben mindestens einer Elektromaschine.

Ein als Elektrofahrzeug ausgebildetes Fahrzeug kann mehrere Asynchronmaschinen als Traktionsantriebe aufweisen. Um für das Fahrzeug eine möglichst hohe Reichweite zu gewährleisten, werden die Asynchronmaschinen verlustminimal betrieben, wobei ein magnetischer Fluss an einen jeweiligen Betriebszustand bzw. Lastzustand angepasst wird. Falls ein Betriebszustand verändert wird, bspw. beim Einleiten eines Überholvorgangs oder einer Änderung einer Lastverteilung zwischen Vorder- und Hinterachse, wird der magnetische Fluss durch eine Maschinenregelung an ein neues Solldrehmoment angepasst, so dass Verluste der Asynchronmaschinen minimal gehalten werden. Ein zeitlicher Verlauf für ein Auf- und Abmagnetisieren der Asynchronmaschinen kann durch eine Exponentialfunktion beschrieben werden. Eine zu dieser Exponentialfunktion zugehörige Zeitkonstante, bspw. Rotorzeitkonstante, ist maschinenspezifisch.

Allerdings wird für das Aufmagnetisieren der Asynchronmaschinen eine gewisse Zeit benötigt. Soll eine Veränderung des Betriebszustands, d. h. in diesem Fall des Drehmoments, möglichst schnell erfolgen, muss ein dafür notwendiger magnetischer Fluss bereits eingeregelt sein. Wird der notwendige magnetische Fluss jedoch permanent eingestellt, wird ein dafür notwendiger Magnetisierungsstrom für alle anderen Betriebszustände unnötige Verluste verursachen. Diese unerwünschten Verluste und der Wunsch nach einer kurzen Einregelzeit für das Drehmoment ergeben somit einen Zielkonflikt zwischen einer Effizienz und einer Dynamik des Drehmoments.

Ein Asynchronmotor mit einer je nach einer Belastung selbsttätig einstellbaren Leistung ist aus der Druckschrift CH 170 198 A bekannt.

Die Druckschrift DE 1 538 300 A1 beschreibt ein Steuergerät zum Festhalten einer Welle eines Stellmotors in einer einstellbaren Winkellage mit einem Schalter, der von einer Nockenscheibe betätigbar ist.

Die Druckschrift DE 103 18 246 A1 beschreibt ein Verfahren zur Steuerung der Bewegung eines Ankers eines elektromagnetischen Aktuators zur Betätigung eines Gaswechselventils einer Brennkraftmaschine für ein Kraftfahrzeug.

Ein Fahrzeug sowie Vorrichtungen und Verfahren zum Steuern eines felderregenden Stroms sind aus der Druckschrift DE 10 2014 213 985 A1 bekannt. Dabei weist das Fahrzeug ein Fahrerassistenzsystem, einen elektrischen Antriebsmotor und einen Erregerstromeinsteller auf. Dabei erfasst der Erregerstromeinsteller eine Erregerstrom-Stellvorrichtung zum Bereitstellen des felderregenden Stroms und eine Flussmodus-Steuerung zum Steuern der Erregerstrom-Stellvorrichtung. Weiterhin stellt das Fahrerassistenzsystem eine Information bereit, die eine fahrerabhängige Information, eine Fahrzeugzustandsinformation oder eine Streckeninformation umfasst. Außerdem umfasst die Erregerstromsteuerung eine Antriebsmoment-Voraussagevorrichtung zum Voraussagen eines voraussichtlichen Antriebsmomentbedarfs und eine Erregerstrombedarf-Ermittlungsvorrichtung zum Bereitstellen eines Flussmodus-Signals als Vorgabe für eine Höhe eines vorgegebenen felderregenden Stroms.

Die Druckschrift DE 10 2015 015 697 A1 beschreibt ein Verfahren zur Ansteuerung einer elektrischen Maschine für den Antrieb eines Kraftfahrzeugs, wobei bei Vorliegen eines Ankündigungssignals, das einen künftigen Beschleunigungswunsch des Fahrers ankündigt, eine Flussdichte wenigstens eines in der elektrischen Maschine erzeugten Magnetfelds erhöht wird. Außerdem wird bei Vorliegen eines Bestätigungssignals, das den angekündigten Beschleunigungswunsch bestätigt, die elektrische Maschine zur Erhöhung ihrer Drehzahl und/oder ihres Drehmoments angesteuert.

Vor diesem Hintergrund war es eine Aufgabe, ein Drehmoment einer Elektromaschine bedarfsgerecht einzustellen.

Diese Aufgabe wird durch ein Verfahren und ein System mit den Merkmalen der unabhängigen Patentansprüche gelöst. Ausgestaltungen des Verfahrens und des Systems gehen aus den abhängigen Patentansprüchen sowie der Beschreibung hervor.

Das erfindungsgemäße Verfahren ist zum Betreiben mindestens einer Elektromaschine vorgesehen, die zum Antreiben eines Fahrzeugs ausgebildet ist. Dabei werden ein Wert für eine Last, die auf mindestens eine Achse des Fahrzeugs wirkt, und ein Wert für mindestens einen Strom für ein Drehmoment aufgrund eines Unterschieds zwischen Lasten der Achsen bzw. einer Verteilung der Last auf die Achsen als mindestens eine Betriebsgröße des Fahrzeugs, die mindestens einen Betriebszustand, bspw. einen Lastzustand, des Fahrzeugs beschreiben, ermittelt. Aus diesem Wert der Last und des mindestens einen Stroms für das Drehmoment als die mindestens eine Betriebsgröße wird eine Änderung eines Drehmoments der mindestens einen Elektromaschine, bspw. aufgrund einer Dynamikanforderung, die an die mindestens eine Elektromaschine gestellt wird, zu einem Zielzeitpunkt vorhergesagt. Ein Strom für eine Magnetisierung der mindestens einen Elektromaschine wird bereits vor dem Zielzeitpunkt eingestellt, wobei der Wert des Stroms für die Magnetisierung erst zu dem bzw. an dem Zielzeitpunkt auf einen Wert angepasst und verändert wird.

Ergänzend ist es möglich, neben dem Wert des Stroms für die Magnetisierung auch den Wert für den Strom für das Drehmoment, das zu dem Zielzeitpunkt erforderlich ist, bereits vor dem Zielzeitpunkt einzustellen und zu dem Zielzeitpunkt anzupassen und/oder zu verändern. Somit ist es möglich, ein Paar aus Werten für zwei Ströme, nämlich den Wert für den Strom für die Magnetisierung und den Wert für den Strom für das Drehmoment abhängig von dem Wert des Drehmoments, der zu dem Zielzeitpunkt über die mindestens eine Betriebsgröße vorhergesagt wird, vor dem Zielzeitpunkt einzustellen und zu dem Zielzeitpunkt anzupassen und/oder zu verändern.

In Ausgestaltung wird ausgehend von einem aktuellen Startzeitpunkt der zukünftige Zielzeitpunkt ermittelt und/oder definiert bzw. festgelegt. Ausgehend von einem jeweiligen Wert der mindestens einen Betriebsgröße, bspw. aufgrund eines zeitlichen Verlaufs des Werts und ggf. aufgrund einer zeitlichen Änderung bzw. Ableitung des Verlaufs des Werts der mindestens einen Betriebsgröße, zu dem aktuellen Startzeitpunkt wird die Änderung des Drehmoments, das von der mindestens einen Betriebsgröße abhängig ist, an dem bzw. zu dem Zielzeitpunkt prädiktiv errechnet und somit vorhergesagt. Dabei wird bereits zu dem Startzeitpunkt die zu dem Zielzeitpunkt zu erwartende Änderung des Drehmoments ermittelt. Der Strom für die Magnetisierung und der Strom für das Drehmoment der mindestens einen Elektromaschine sind Betriebsgrößen, die das Drehmoment ebenfalls beeinflussen. Die erforderlichen Werte des Stroms für die Magnetisierung und des Stroms für das Drehmoment werden bereits zu dem Startzeitpunkt berechnet und somit ebenfalls prognostiziert. Die Werte für den Strom für die Magnetisierung und das Drehmoment werden zu einem Zwischenzeitpunkt nach dem Startzeitpunkt und vor dem Zielzeitpunkt eingestellt und nachfolgend zu dem Zielzeitpunkt verändert sowie an die zu dem Zielzeitpunkt prognostizierte und/oder erwartete Änderung des Drehmoments der mindestens einen Elektromaschine angepasst.

Aufgrund des Betriebszustands wird eine Wahrscheinlichkeit für die Änderung des Drehmoments zu dem Zielzeitpunkt ermittelt, wobei der Strom für die Magnetisierung und/oder das Drehmoment eingestellt wird bzw. werden, wenn die Wahrscheinlichkeit mindestens so groß wie ein hierfür vorgesehener Schwellwert ist.

Ein Wert der mindestens einen Betriebsgröße bzw. mindestens eines entsprechenden Betriebsparameters des Fahrzeugs wird üblicherweise durch mindestens einen Sensor des Fahrzeugs erfasst und/oder ermittelt, wobei der Verlauf der mindestens einen Betriebsgröße aufgrund ermittelter Werte von einem Steuergerät des Fahrzeugs überwacht wird. Ein jeweiliger Betriebszustand des Fahrzeugs zu dem Startzeitpunkt ergibt sich aufgrund eines aktuellen Werts der mindestens einen Betriebsgröße. Dabei ist es möglich, dass von dem mindestens einen Sensor sich jeweils ergebende Istwerte als Werte der mindestens einen Betriebsgröße ermittelt und im Rahmen des Verfahrens berücksichtigt werden.

Ergänzend werden auch Werte der mindestens einen Betriebsgröße von dem mindestens einen Sensor ermittelt, die als Sollwerte der mindestens einen Betriebsgröße ausgebildet sind und üblicherweise von einem Fahrer des Fahrzeugs durch Bedienen eines Bedienelements, bspw. eines Pedals, vorgegeben werden. Dabei ist einem jeweiligen Bedienelement ebenfalls ein Sensor zugeordnet, der den von dem Fahrer jeweils vorgesehenen Wert bzw. Sollwert für die mindestens eine Betriebsgröße erfasst.

Ein jeweiliger Betriebszustand des Fahrzeugs ergibt sich aus dem jeweiligen Wert der mindestens einen Betriebsgröße, wobei der Betriebszustand aufgrund des jeweiligen Werts definiert wird. Falls der mindestens eine Wert der Betriebsgröße, bspw. zu dem vorgesehenen Startzeitpunkt, von dem Fahrer als Sollwert vorgegeben wird, wird der jeweils aktuelle Wert bzw. Istwert der mindestens einen Betriebsgröße üblicherweise an den vorgegebenen Sollwert bspw. über einen Regler, der als Komponente des Steuergeräts ausgebildet ist, angepasst. Unter Berücksichtigung einer hierbei durchzuführenden Regelung ist es in Ausgestaltung möglich, zu dem Zielzeitpunkt den Istwert als Wert der mindestens einen Betriebsgröße zu ermitteln, der aufgrund des zu dem Startzeitpunkt vorgegebenen Sollwerts eingeregelt wird. Dabei wird der sich zu dem Zielzeitpunkt ergebende Wert der mindestens einen Betriebsgröße bereits zu dem Startzeitpunkt aufgrund des vorgegebenen Sollwerts der mindestens einen Betriebsgröße und/oder eines aktuellen Werts bzw. Istwerts mindestens einer weiteren Betriebsgröße vorhergesagt. Unter Berücksichtigung dessen ist es bereits zu dem Zwischenzeitpunkt möglich, den Strom für die Magnetisierung und/oder das Drehmoment prädiktiv auf den jeweils vorgesehenen Wert einzustellen und diesen Wert zu dem Zielzeitpunkt zu verändern und somit anzupassen.

In einer möglichen Ausgestaltung des Verfahrens wird neben dem Strom für die Magnetisierung auch der Strom zum Bilden des Drehmoments der mindestens einen Elektromaschine eingestellt. Dabei ist jeweils einem Wert des Stroms für die Magnetisierung der mindestens einen Elektromaschine ein Wert für den Strom zum Bilden des Drehmoments der mindestens einen Elektromaschine zugeordnet. Außerdem wird eine Paarung bzw. ein Paar für Werte dieser beiden Ströme für die Magnetisierung und zum Bilden des Drehmoments im Rahmen einer Stromsollwertberechnung kontinuierlich angepasst, was rechnergestützt unter Berücksichtigung von Kennfeldern und/oder von iterierenden Suchverfahren durchgeführt wird. Dabei ist es möglich, bspw. ein Kennfeld zu verwenden, das einen Zusammenhang zwischen dem Wert des Drehmoments und dem Paar aus Werten für die beiden Ströme, d. h. dem Strom für die Magnetisierung und dem Strom zum Bilden des Drehmoments, beschreibt. Somit ist jeweils einem Wert, bspw. einem Sollwert für das Drehmoment, ein Paar aus Werten für die beiden Ströme zugeordnet. Falls zu dem Startzeitpunkt aufgrund des Werts der mindestens einen Betriebsgröße des Fahrzeugs der Wert für das Drehmoment und/oder dessen Änderung für den Zielzeitpunkt vorausgesagt wird, wird bspw. unter Berücksichtigung des mindestens einen Kennfelds der Wert für den Strom zur Magnetisierung und der Wert des Stroms zum Bilden des Magnetfelds berechnet, wobei das Paar für die beiden Werte des Stroms dem zu dem Zielzeitpunkt zu erwartenden Wert des Drehmoments zugeordnet wird. Hierbei ist es möglich, aktuelle Werte des Stroms zu erfassen sowie zukünftig zu dem Zielzeitpunkt zu erwartende Werte des Drehmoments kontinuierlich vorherzusagen und Werte zum kontinuierlichen Anpassen der Ströme abhängig von den zu erwartenden Werten des Drehmoments kontinuierlich im Rahmen der Stromsollwertberechnung zu berechnen und somit kontinuierlich anzupassen.

Durch den Strom zum Magnetisieren wird die mindestens eine Elektromaschine bereits vor dem Zielzeitpunkt aufmagnetisiert, bevor der Sollwert für das Drehmoment zu dem Zielzeitpunkt angefordert wird und/oder erforderlich ist. Aufgrund der Berechnung bzw. Stromsollwertberechnung der Sollwerte für die beiden Ströme wird anhand einer bestehenden Magnetisierung der mindestens einen Elektromaschine das Paar bzw. die Paarung der Werte für die Ströme kontinuierlich eingestellt. Dabei ist es bspw. möglich, ein prädiktives Aufmagnetisieren unter Berücksichtigung eines Maximums eines zur Verfügung stehenden Werts des Stroms eines Stators der mindestens einen Elektromaschine einzustellen. Anhand eines tatsächlichen Werts bzw. Sollwerts des Drehmoments wird über die Berechnung der Werte bzw. Sollwerte für die beiden Ströme in einem weiteren Verlauf ein verlustoptimaler Wert für den Strom zur Magnetisierung eingestellt, wobei sich unter anderem ergibt, dass dadurch bereits vor dem Zielzeitpunkt ein magnetischer Fluss aufgebaut wird und ein erforderliches Drehmoment für die mindestens eine Elektromaschine zu dem Zielzeitpunkt ohne größeren zeitlichen Verzug gestellt wird.

Das vorgeschlagene Verfahren, mit dem es möglich ist, die mindestens eine Elektromaschine prädiktiv aufzumagnetisieren, ist auch für eine fremderregte Synchronmaschine durchführbar, da bei dieser ein Erzeugen eines magnetischen Flusses eines Rotors über eine Erregereinrichtung ebenfalls Zeit benötigt und mit dem Verfahren prädiktiv steuerbar ist.

Der Wert des Stroms für die Magnetisierung und/oder das Drehmoment wird bzw. werden durch Einstellen und Ändern des hierfür vorgesehenen Werts erhöht oder reduziert. Der Wert des Stroms für die Magnetisierung und der Wert des Stroms für das Drehmoment bilden in Ausgestaltung das Paar für Werte der beiden Ströme, wobei diese in der Regel zueinander korrelierten Werte über das Kennfeld von einem hierzu korrelierten Wert für das bspw. zu erwartende bzw. erforderliche Drehmoment abhängig sind.

Der Wert für die mindestens eine Betriebsgröße und somit der mindestens eine Betriebszustand wird mit mindestens einem Sensor des Fahrzeugs zu dem Startzeitpunkt ermittelt und/oder von einem Fahrer des Fahrzeugs durch Bedienen des Bedienelements vorgegeben und/oder eingestellt.

Das Verfahren wird für mindestens eine Elektromaschine durchgeführt, die als Asynchronmaschine und/oder fremderregte Synchronmaschine ausgebildet ist.

Außerdem wird eine Zeitabhängigkeit der Magnetisierung mit einer Exponentialfunktion beschrieben und/oder ist von einer Rotorzeitkonstante der mindestens einen Elektromaschine abhängig.

In Ausgestaltung wird der Wert eines Schlupfs von mindestens einem Rad des Fahrzeugs als mindestens eine weitere Betriebsgröße ermittelt. Weiterhin ist es möglich, den Unterschied eines Schlupfs unterschiedlicher Räder und/oder Achsen zu berücksichtigen und zumindest den Wert des Stroms für die Magnetisierung und ggf. auch den Wert des Stroms für das Drehmoment abhängig hiervon einzustellen und/oder zu ändern.

Erfindungsgemäß wird als der mindestens eine Betriebsparameter eine Last einer Achse und der Wert für mindestens einen Strom, d. h. des Stroms für die Magnetisierung und ggf. auch des Stroms für das Drehmoment, aufgrund eines Unterschieds zwischen Lasten der Achsen bzw. einer Verteilung der Last auf die Achsen eingestellt und/oder verändert.

Das erfindungsgemäße System ist zum Betreiben mindestens einer Elektromaschine ausgebildet, die zum Antreiben eines Fahrzeugs ausgebildet ist. Das System weist ein Steuergerät auf, das dazu ausgebildet ist, aufgrund eines ermittelten Werts für eine Last, die auf mindestens eine Achse des Fahrzeugs wirkt, und eines Werts für mindestens einen Strom für ein Drehmoment aufgrund eines Unterschieds zwischen Lasten der Achsen bzw. einer Verteilung der Last auf die Achsen als mindestens eine Betriebsgröße des Fahrzeugs, die mindestens einen Betriebszustand des Fahrzeugs beschreibt, zu einem Startzeitpunkt eine Änderung eines Drehmoments der mindestens einen Elektromaschine zu einem Zielzeitpunkt vorherzusagen. Das Steuergerät ist weiterhin dazu ausgebildet, zu veranlassen, dass ein Strom für eine Magnetisierung der mindestens einen Elektromaschine nach dem Startzeitpunkt und vor dem Zielzeitpunkt auf einen Wert eingestellt wird, und dass der Wert des Stroms für die Magnetisierung erst zu dem Zielzeitpunkt angepasst und/oder verändert, bspw. erhöht oder reduziert, wird.

In Ausgestaltung ist es ergänzend möglich, von dem Steuergerät neben dem Wert des Stroms für die Magnetisierung ergänzend auch einen Wert eines Stroms für das Drehmoment der mindestens einen Elektromaschine bereits vor dem Zielzeitpunkt einzustellen und zu dem Zielzeitpunkt anzupassen und/oder zu verändern.

Das System weist mindestens eine Leistungselektronik auf, die der mindestens einen Elektromaschine zugeordnet und dazu ausgebildet ist, der mindestens einen Elektromaschine den Strom für die Magnetisierung sowie den Strom für das Drehmoment bereitzustellen. Das Steuergerät ist dazu ausgebildet, der mindestens einen Leistungselektronik den Wert des Stroms für die Magnetisierung sowie für das Drehmoment vorzugeben.

Außerdem weist das System mindestens einen Sensor auf, der dazu ausgebildet ist, den Wert der mindestens einen Betriebsgröße des Fahrzeugs zu ermitteln und dem Steuergerät bereitzustellen. Hierbei ist es möglich, dass der mindestens eine Sensor bspw. mindestens einer Achse und/oder mindestens einem Rad als Komponente des Fahrzeugs zugeordnet und dazu ausgebildet ist, einen Wert, in der Regel einen Istwert, der Betriebsgröße der Komponente zu erfassen.

Mit dem Verfahren und dem System ist es möglich, ein Fahrzeug durch prädiktive bzw. vorausschauende Aufmagnetisierung der Asynchronmaschine oder fremderregten Synchronmaschine, als Beispiele für die mindestens eine Elektromaschine, effizient und dynamisch zu betreiben.

Um die mindestens eine Elektromaschine verlustoptimal zu betreiben, wird zunächst der jeweils zum Betriebszustand des Fahrzeugs optimal passende magnetische Fluss eingeregelt. Durch permanente Auswertung des Betriebszustands anhand der mindestens einen Betriebsgröße des Fahrzeugs sowie des Fahrerwunsches während des Fahrbetriebs wird der Strom für die Magnetisierung und ggf. für das Drehmoment prädiktiv erhöht, sobald eine Situation erkannt wird, die eine hohe Dynamikanforderung an das Drehmoment wahrscheinlich macht. Damit ist der benötigte magnetische Fluss bereits zu dem Zielzeitpunkt für eine vollständige Dynamik des Drehmoments eingeregelt. Wird nachfolgend durch Auswertung des Betriebszustands des Fahrzeugs ein konstantes oder wenig dynamisches Verhalten des Drehmoments, bspw. für einen Sollwert des Drehmoments als Betriebsgröße der mindestens einen Elektromaschine, festgestellt, wird der Strom für die Magnetisierung und ggf. auch der Strom für das Drehmoment wieder auf einen verlustoptimalen Betrag reduziert.

Somit ist es möglich, einen Zielkonflikt zwischen einer Effizienz und somit der Reichweite sowie einer hohen Dynamik des Drehmoments weitgehend aufzulösen. Der für den magnetischen Fluss notwendige Strom für die Magnetisierung und ggf. auch der Strom für das Drehmoment wird bzw. werden überwiegend verlustoptimal eingestellt und im Rahmen und/oder unter Berücksichtigung der Rotorzeitkonstante vor der eigentlichen Änderung des Sollwerts des Drehmoments prädiktiv erhöht. Für die Regelung der mindestens einen Elektromaschine wird in dem Steuergerät und/oder der Leistungselektronik mindestens eine Informationsschnittstelle bereitgestellt, die das prädiktive Erhöhen des Stroms für die Magnetisierung und ggf. für das Drehmoment ermöglicht. Die prädiktiven Erhöhung des Stroms zur Magnetisierung und ggf. zum Einstellen des Drehmoments erforderliche Information, bspw. über den Wert der mindestens einen Betriebsgröße, ist in mindestens einem Steuergerät, bspw. einem Steuergeräteverbund, des Fahrzeugs vorhanden. So ist zum Beispiel von einer erhöhten Dynamik des Drehmoments auszugehen, wenn vom Fahrer ein Sportmodus als Betriebszustand gewählt wird. Weiterhin wird von einer Erhöhung der Dynamik des Drehmoments ausgegangen und der Strom für die Magnetisierung und ggf. der Strom für das Drehmoment prädiktiv erhöht, wenn an der vorderen oder hinteren Achse ein größerer Schlupf als Betriebsgröße mindestens eines Rads erfasst wird und das Drehmoment auf nicht schlupfende Räder und/oder mindestens eine Achse schnell umzuverteilen ist. Hierbei wird eine Funktion zur Schätzung eines Reibwerts zwischen Reifen auf den Rädern und der befahrenen Fahrbahn als Betriebsgröße verwendet. Eine derartige Funktion ist auch in einem konventionellen Fahrzeug zum Durchführen einer Allradfunktion zum bedarfsgerechten Zuschalten der Hinterachse verwendbar.

Durch die prädiktive Aufmagnetisierung wird der magnetische Fluss vor der eigentlichen Änderung der Last angepasst, wodurch eine Latenzzeit zwischen dem Sollwert und dem Istwert des Drehmoments möglichst klein gehalten wird.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

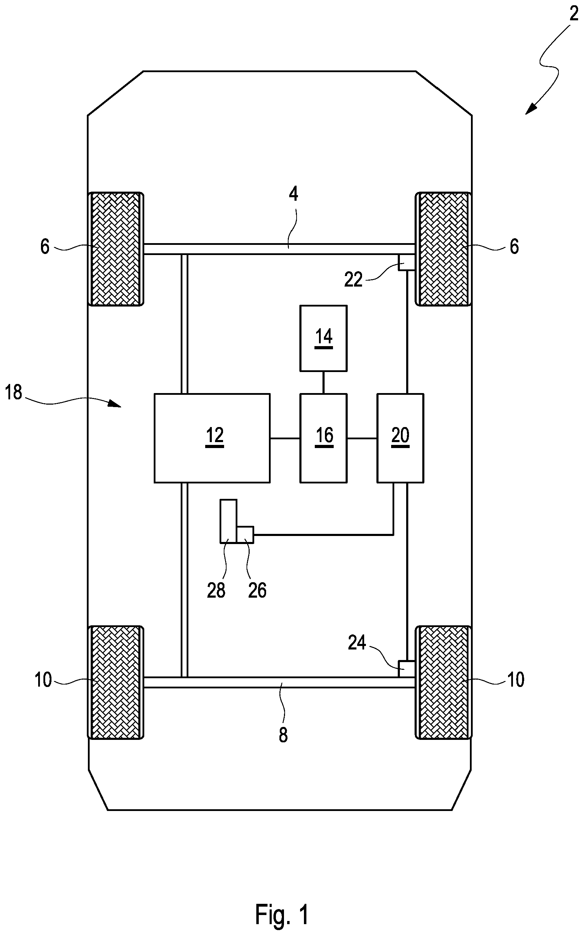

Figur 1 umfasst eine schematische Darstellung einer Ausführungsform des erfindungsgemäßen Systems bei Durchführung einer Ausführungsform des erfindungsgemäßen Verfahrens.

Figur 1 zeigt in schematischer Darstellung ein hier als Kraftfahrzeug ausgebildetes Fahrzeug 2 mit einer vorderen Achse 4, an der vordere Räder 6 angeordnet sind, und einer hinteren Achse 8, an der hintere Räder 10 angeordnet sind, die einen von dem Fahrzeug 2 zu befahrenden Untergrund berühren. Zum Antreiben des Fahrzeugs 2 weist dieses mindestens eine Elektromaschine 12 auf, die dazu ausgebildet ist, elektrische Energie aus mindestens einer Batterie 14 in mechanische Energie umzuwandeln und mindestens einem Rad 6, 10 und/oder mindestens einer Achse 4, 8 bereitzustellen. Dabei wird ein Wert mindestens einer elektrischen Betriebsgröße, bspw. mindestens einer elektrischen Spannung und/oder mindestens eines elektrischen Stroms, von mindestens einer Leistungselektronik 16 für die mindestens eine Elektromaschine 12 eingestellt.

Die ebenfalls schematisch dargestellte Ausführungsform des erfindungsgemäßen Systems 18 weist mindestens ein Steuergerät 20 und mindestens einen Sensor 22, 24, 26 des Fahrzeugs 2 auf. Jeder Sensor 22, 24, 26 ist dazu ausgebildet, einen Wert mindestens einer Betriebsgröße bzw. mindestens eines Betriebsparameters des Fahrzeugs 2 zu erfassen und dem Steuergerät 20 zu übermitteln. Dabei sind mindestens zwei Sensoren 22, 24 jeweils mindestens einem Rad 6, 10 und/oder mindestens einer Achse 4, 8 zugeordnet und dazu ausgebildet, als die mindestens eine Betriebsgröße einen Schlupf zwischen mindestens einem Reifen, der auf mindestens einem Rad 6, 10 aufgezogen, und dem Untergrund und eine Last, die auf die mindestens eine Achse 4, 6 wirkt, zu ermitteln. Mindestens ein weiterer Sensor 26 ist mindestens einem Bedienelement 28 des Fahrzeugs 2 zugeordnet, das von einem Fahrer des Fahrzeugs 2 bedienbar ist, wodurch durch den Fahrer mindestens ein Wert, in der Regel mindestens ein Sollwert, für mindestens eine Betriebsgröße vorgegeben wird, wobei dieser Wert von dem mindestens einen weiteren Sensor 26 erfasst und dem Steuergerät 20 bereitgestellt wird. Dabei ist es möglich, dass der Fahrer durch Einstellen, bspw. Ändern, des Werts der mindestens einen Betriebsgröße einen Betriebszustand des Fahrzeugs 2 einstellt, bspw. ändert.

Bei der Ausführungsform des erfindungsgemäßen Verfahrens wird zu einem Startzeitpunkt der Wert der mindestens einen Betriebsgröße des Fahrzeugs von dem mindestens einen Sensor 22, 24, 26 erfasst. Dabei handelt es sich bspw. um einen als Istwert ausgebildeten Wert der mindestens einen Betriebsgröße, der sich während des Betriebs des Fahrzeugs 2 zu dem Startzeitpunkt ergibt, und von dem ersten oder zweiten Sensor 22, 24 erfasst wird.

Ergänzend ist der Wert der mindestens einen Betriebsgröße als Sollwert ausgebildet, der durch den Fahrer durch Bedienen des mindestens einen Bedienelements 28 vorgegeben und von dem weiteren dritten Sensor 26 erfasst wird.

Der zu dem Startzeitpunkt ermittelte und/oder erfasste Wert, d. h. der Sollwert und/oder der Istwert, der mindestens einen Betriebsgröße wird von dem mindestens einen Sensor 22, 24, 26 an das Steuergerät 20 übermittelt. Ein Verlauf des Werts der mindestens einen Betriebsgröße und somit auch eine aktuelle zeitliche Änderung bzw. Ableitung des Werts bzw. des Verlaufs des Werts der mindestens einen Betriebsgröße wird bspw. während eines Zeitintervalls überwacht und zu dem Startzeitpunkt übermittelt. Auf Grundlage dessen wird von dem Steuergerät 20 ein zu einem Zielzeitpunkt zu erwartender Wert der mindestens einen Betriebsgröße vorhergesagt, woraus sich wiederum ein Wert des Drehmoments der mindestens einen Elektromaschine 12 zu dem Zielzeitpunkt ergibt, der bereits zu dem Startzeitpunkt prognostiziert wird. Es ist weiterhin möglich, aufgrund eines zukünftig zu erwartenden Verlaufs des Drehmoments auch eine Änderung des Drehmoments zu dem Zielzeitpunkt vorherzusagen. Aufgrund dessen ist es möglich, bereits zu einem Zwischenzeitpunkt nach dem Startzeitpunkt und vor dem Zielzeitpunkt einen Wert für einen Strom zum Magnetisieren, üblicherweise zum Aufmagnetisieren der mindestens einen Elektromaschine 12, einzustellen und weiterhin zu dem Zielzeitpunkt anzupassen.

Aufgrund dessen ist es möglich, bereits nach dem Startzeitpunkt und vor dem Zielzeitpunkt auch einen Wert für einen Strom zum Einstellen des Drehmoments für die mindestens eine Elektromaschine 12 einzustellen und zu dem Zielzeitpunkt anzupassen. Somit wird ein Paar aus Werten für zwei Ströme, d. h. des Stroms für die Magnetisierung und eines Stroms für das Drehmoment, eingestellt und angepasst. Dieses Paar aus zueinander bspw. korrelierten Werten für die beiden Ströme ist unter Nutzung eines Kennfelds, das in dem Steuergerät 20 abgelegt ist, einstellbar, wobei das Kennfeld eine Abhängigkeit eines Werts für mindestens einen der beiden Ströme, bspw. des Paars aus Werten für beide Ströme, von der mindestens einen Betriebsgröße beschreibt, mit der die Änderung des Drehmoments vorhergesagt wird.

Eine kontinuierliche Anpassung eines optimalen Paars bzw. einer optimalen Paarung der Ströme, d. h. des Stroms für die Magnetisierung und des drehmomentbildenden Stroms, wird in Software durch Kennfelder oder iterierende Suchverfahren durchgeführt, d. h. jegliche Änderung des Drehmoments führt zu einer neuen Berechnung bzw. Stromsollwertberechnung für Sollwerte des Paars an Strömen. Die kontinuierliche Anpassung der Berechnung der Sollwerte für mindestens einen der Ströme wird zu einem Zwischenzeitpunkt nach dem Startzeitpunkt und vor dem Zielzeitpunkt durchgeführt.

Das Verfahren ist von einem Einregeln eines verlustoptimalen Stroms für die Magnetisierung unabhängig. Das Verfahren ist zum Aufmagnetisieren der mindestens einen Elektromaschine 12 vorgesehen, bevor ein Sollwert für das Drehmoment kommandiert wird. Die Berechnung bzw. Stromsollwertberechnung der Sollwerte für die Ströme übernimmt dann anhand der bestehenden Magnetisierung das kontinuierliche Einstellen des Paars der Ströme. Das prädiktive Aufmagnetisieren kann hierbei z. B. mit dem Maximum des zur Verfügung stehenden Stroms eines Stators der mindestens einen Elektromaschine 12 erfolgen. Anhand des tatsächlichen Sollwerts des Drehmoments ermittelt dann die Berechnung der Sollwerte für die Ströme im weiteren Verlauf den verlustoptimalen Strom für die Magnetisierung mit dem Vorteil, dass schon ein magnetischer Fluss aufgebaut ist und das Drehmoment faktisch ohne größeren Zeitverzug gestellt werden kann.

Das vorgeschlagene Verfahren des prädiktiven Aufmagnetisierens gilt auch für fremderregte Synchronmaschinen, da hier das Erzeugen eines magnetischen Flusses eines Rotors der mindestens einen Elektromaschine 12 über eine Erregereinrichtung ebenfalls Zeit benötigt und prädiktiv gesteuert werden kann.

## Patentansprüche

1. Verfahren zum Betreiben mindestens einer Elektromaschine (12), die zum Antreiben eines Fahrzeugs (2) ausgebildet ist, bei dem ein Strom für eine Magnetisierung der mindestens einen Elektromaschine (12) vor einem Zielzeitpunkt auf einen Wert eingestellt wird, wobei der Wert des Stroms für die Magnetisierung zu dem Zielzeitpunkt angepasst und verändert wird, **dadurch gekennzeichnet, dass** ein Wert für eine Last, die auf mindestens eine Achse (4, 6) des Fahrzeugs (2) wirkt, und ein Wert für mindestens einen Strom für ein Drehmoment, aufgrund eines Unterschieds zwischen Lasten der Achsen (4, 6) oder einer Verteilung
der Last auf die Achsen (4, 6), als mindestens eine Betriebsgröße des Fahrzeugs (2) ermittelt werden, wobei aus dem Wert der Last und dem Wert des mindestens einen Stroms für das Drehmoment eine Änderung des Drehmoments der mindestens einen Elektromaschine (12) zu dem Zielzeitpunkt vorhergesagt wird.

2. Verfahren nach Anspruch 1, bei dem aufgrund des Werts der mindestens einen Betriebsgröße eine Wahrscheinlichkeit für die Änderung des Drehmoments zu dem Zielzeitpunkt ermittelt wird, wobei der Strom für die Magnetisierung eingestellt wird, wenn die Wahrscheinlichkeit mindestens so groß wie ein hierfür vorgesehener Schwellwert ist.

3. Verfahren nach Anspruch 1 oder 2, bei dem der Wert für die mindestens eine Betriebsgröße mit mindestens einem Sensor (22, 24, 26) des Fahrzeugs (2) ermittelt wird.

4. Verfahren nach einem der voranstehenden Ansprüche, das für mindestens eine Elektromaschine (12) durchgeführt wird, die als Asynchronmaschine oder fremderregte Synchronmaschine ausgebildet ist.

5. System zum Betreiben mindestens einer Elektromaschine (12), die zum Antreiben eines Fahrzeugs (2) ausgebildet ist, wobei das System (18) ein Steuergerät (20) aufweist, wobei das Steuergerät (20) dazu ausgebildet ist, zu veranlassen, dass ein Strom für eine Magnetisierung der mindestens einen Elektromaschine (12) vor dem Zielzeitpunkt auf einen Wert eingestellt und der Wert des Stroms für die Magnetisierung zu dem Zielzeitpunkt verändert wird, **dadurch gekennzeichnet, dass** das das Steuergerät (20) weiterhin dazu ausgebildet ist, aufgrund eines ermittelten Werts für eine Last, die auf mindestens eine Achse (4, 6) des Fahrzeugs (2) wirkt, und eines Werts für mindestens einen Strom für ein Drehmoment, aufgrund eines Unterschieds zwischen Lasten der Achsen (4, 6) oder einer Verteilung der Last auf die Achsen (4, 6), als
mindestens eine Betriebsgröße des Fahrzeugs (2) eine Änderung eines Drehmoments der mindestens einen Elektromaschine (12) zu dem Zielzeitpunkt vorherzusagen.

6. System nach Anspruch 5, die mindestens eine Leistungselektronik (16) aufweist, die der mindestens einen Elektromaschine (12) zugeordnet und dazu ausgebildet ist, der mindestens einen Elektromaschine (12) den Strom für die Magnetisierung bereitzustellen, wobei das Steuergerät (20) dazu ausgebildet ist, der mindestens einen Leistungselektronik (16) den Wert des Stroms für die Magnetisierung vorzugeben.

7. System nach Anspruch 5 oder 6, das mindestens einen Sensor (22, 24, 26) aufweist, der dazu ausgebildet ist, den Wert der mindestens einen Betriebsgröße des Fahrzeugs (2) zu ermitteln und dem Steuergerät (20) bereitzustellen.

## Claims

1. Method for operating at least one electric machine (12) designed to drive a vehicle (2), wherein a current for a magnetisation of the at least one electric machine (12) is set to a value prior to a target time point, wherein the value of the current for the magnetisation is adapted and changed at the target time point, **characterised in that** a value for a load acting on at least one axle (4, 6) of the vehicle (2) and a value for at least one current for a torque are determined, based on a difference between loads on the axles (4, 6) or a distribution of the load among the axles (4, 6), as at least one operating variable of the vehicle (2), wherein a change in the torque of the at least one electric machine (12) at the target time point is predicted from the value of the load and the value of the at least one current for the torque.

2. Method according to claim 1, wherein, based on the value of the at least one operating parameter, a probability for the change in the torque at the target time point is determined, wherein the current for the magnetisation is set if the probability is at least as great as a threshold value provided for this.

3. Method according to claim 1 or 2, wherein the value for the at least one operating parameter is determined using at least one sensor (22, 24, 26) of the vehicle (2).

4. Method according to any of the preceding claims, which is carried out for at least one electric machine (12) designed as an asynchronous machine or externally excited synchronous machine.

5. System for operating at least one electric machine (12) designed to drive a vehicle (2), wherein the system (18) has a control device (20), wherein the control device (20) is designed to cause a current for a magnetisation of the at least one electric machine (12), prior to the target time point, to be set to a value and the value of the current for the magnetisation to be changed at the target time point, **characterised in that** the control device (20) is further designed to predict, based on a determined value for a load acting on at least one axle (4, 6) of the vehicle (2) and a value for at least one current for a torque, based on a difference between loads on the axles (4, 6) or a distribution of the load among the axles (4, 6), as at least one operating variable of the vehicle (2), a change in a torque of the at least one electric machine (12) at the target time point.

6. System according to claim 5, having at least one power electronics unit (16) which is associated with the at least one electric machine (12) and which is designed to provide the at least one electric machine (12) with the current for the magnetisation, wherein the control device (20) is designed to specify the value of the current for the magnetisation to the at least one power electronics unit (16).

7. System according to claim 5 or 6, having at least one sensor (22, 24, 26) designed to determine the value of the at least one operating parameter of the vehicle (2) and to provide said value to the control device (20).

## Revendications

1. Procédé de fonctionnement d'au moins une machine électrique (12) qui est conçue pour entraîner un véhicule (2), dans lequel un courant pour une magnétisation de l'au moins une machine électrique (12) est réglé à une valeur avant un instant cible, dans lequel la valeur du courant pour la magnétisation est adaptée et modifiée à l'instant cible, **caractérisé en ce qu'**une valeur pour une charge, qui agit sur au moins un essieu (4, 6) du véhicule (2), et une valeur pour au moins un courant pour un couple, sur la base d'une différence entre des charges des essieux (4, 6) ou d'une répartition de la charge sur les essieux (4, 6), sont déterminées en tant qu'au moins une grandeur de fonctionnement du véhicule (2), dans lequel une modification du couple de l'au moins une machine électrique (12) est prédite à partir de la valeur de la charge et de la valeur de l'au moins un courant pour le couple à l'instant cible.

2. Procédé selon la revendication 1, dans lequel, sur la base de la valeur de l'au moins une grandeur de fonctionnement, une probabilité est déterminée pour la modification du couple à l'instant cible, dans lequel le courant pour la magnétisation est réglé lorsque la probabilité est au moins aussi grande qu'une valeur seuil prévue à cet effet.

3. Procédé selon la revendication 1 ou 2, dans lequel la valeur pour l'au moins une grandeur de fonctionnement est déterminée avec au moins un capteur (22, 24, 26) du véhicule (2).

4. Procédé selon l'une quelconque des revendications précédentes, qui est mis en œuvre pour au moins une machine électrique (12) qui est conçue en tant que machine asynchrone ou machine synchrone à excitation séparée.

5. Système de fonctionnement d'au moins une machine électrique (12), qui est conçue pour entraîner un véhicule (2), dans lequel le système (18) présente un dispositif de commande (20), dans lequel le dispositif de commande (20) est conçu pour ordonner qu'un courant pour une magnétisation de l'au moins une machine électrique (12) soit réglé à une valeur avant l'instant cible et pour faire varier la valeur du courant pour la magnétisation à l'instant cible, **caractérisé en ce que** le dispositif de commande (20) est en outre conçu pour prédire, sur la base d'une valeur déterminée pour une charge qui agit sur au moins un essieu (4, 6) du véhicule (2) et d'une valeur pour au moins un courant pour un couple, sur la base d'une différence entre des charges des essieux (4, 6) ou d'une répartition de la charge sur les essieux (4, 6), en tant qu'au moins une grandeur de fonctionnement du véhicule (2), une variation d'un couple de l'au moins une machine électrique (12) à l'instant cible.

6. Système selon la revendication 5, qui présente au moins une électronique de puissance (16) qui est associée à l'au moins une machine électrique (12) et conçue pour mettre à disposition de l'au moins une machine électrique (12) le courant pour la magnétisation, dans lequel le dispositif de commande (20) est conçu pour prédéfinir la valeur du courant pour la magnétisation à l'au moins une électronique de puissance (16).

7. Système selon la revendication 5 ou 6, qui présente au moins un capteur (22, 24, 26) qui est conçu pour déterminer la valeur de l'au moins une grandeur de fonctionnement du véhicule (2) et la fournir au dispositif de commande (20).
